# EUROPEAN PATENT SPECIFICATION

(11) **EP 3 173 291 B1**
(45) Date of publication and mention of the grant of the patent: **20.06.2018**
(21) Application number: 15196468.1
(22) Date of filing: 26.11.2015
(51) Int. Cl.: B60R 13/00, B60R 13/02

(54) **TOLERANCE GAP FLAG**
TOLERANZSPALTFLAGGE
INDICATEUR D'ÉCART DE TOLÉRANCE

(43) Date of publication of application: 31.05.2017
(73) Proprietor: Volvo Car Corporation, 40 531 Göteborg (SE)
(72) Inventor: Disley, Jonathan, 44244 Kungälv (SE); Palm, Niklas, 41467 Göteborg (SE); Nordin, Henrik, 417 60 Göteborg (SE); Bernal Pabon, Juan Pablo, 416 51 Göteborg (SE)
(74) Representative: Volvo Car Corporation

(56) References cited:
- WO-A1-02/31290
- JP-A- 2007 198 098

## Description

### TECHNICAL FIELD

The invention relates to a decorative arrangement for mounting on a support and comprising a first element and a second element configured for being arranged next to each other so as to define a visual symbol, pattern or design.

The invention can be used for different types of decorative purposes in the automotive industry, for example in interior or exterior arrangements of decorative strips and similar elements in vehicles. The invention is not limited to the field of vehicles, but can be applied in various fields of technology where a decorative arrangement comprising at least two different elements are mounted next to each other.

### BACKGROUND

In various fields of industry, for example in the field of vehicles, there is a general need to provide decorative parts so as to be mounted on various types of support elements. It is of high importance that such decorative parts have accurate measurements and shape in order to give an impression of precision, fit and quality when these parts are mounted on their support elements.

With regard to decorative arrangements such as strips, linings and panels which are mounted on vehicles, i.e. either on interior or exterior parts of vehicles, it is of particular importance that such arrangements are manufactured with a high level of accuracy, fit and precision. For example, it is important that the measurements of the element in question does not deviate from pre-set, nominal measurements, including certain tolerances.

However, even if the manufacturing of such parts as mentioned above is carried out with a high level of accuracy and within acceptable tolerances, there are always some slight variations in measurements and fit between each individual element. This is due to imperfections during various manufacturing processes, deviations in materials, temperature variations during manufacturing and many other reasons.

As an example, an arrangement of decorative strips or linings which are used in a vehicle may be manufactured and then mounted in the form of two or more separate pieces. When mounting such a decorative arrangement, for example with two separate strip elements next to each other, there will be a split or slight gap between the two elements. Even though it can be expected that the elements have been manufactured with accurate measurements and within certain tolerances, such a gap can in most practical cases not be zero. This means that there will be a narrow, but still visible, gap between the two elements. Such a visible gap may give an observer or user an impression of low precision and inferior quality of the decorative arrangement.

Also, due to the above-mentioned slight variations in measurement and shape, this split or gap may be of different magnitude. In the unlucky event that the gap is relatively large, an observer may obviously get an impression that the decorative arrangement is of low quality. Such an impression may influence a user, or potential buyer of the vehicle, in a negative direction.

In summary, it is known that the perceived appearance of a decorative arrangement by an observer - and as a result the perceived quality of the entire interior of the vehicle - can be affected in a negative way due to deviations of such arrangements from their nominal, expected measurements and shapes. As a result, the user may get an impression of low quality and poor precision, which obviously is a problem.

The above-mentioned situation is based on the visual perception that an observer gets from variations in geometry and measurements of a decorative arrangement. In the automotive industry, for example, the subjective appearance of certain visible parts, such as decorative parts, is crucial in order for a user and a potential vehicle buyer to get an overall impression of quality and precision. This means that such parts must be manufactured and mounted in a manner wherein the risk for being visually perceived as being of low quality is minimized. The visual impression that a user gets is relevant for example in a situation where two components are situated next to each other, i.e. where a gap or split is created as explained above.

The patent document DE 10025360 teaches a decorative strip for interior use in a vehicle. The decorative strip comprises an upper strip with a decorative outer surface and which fits into a recess in a lower strip. Consequently, it is previously known to mount a an upper vehicle decorative strip into a lower decorative strip of different material, in a recess, so as to provide a flat transition between the two parts.

Furthermore, the document WO 02/31290 discloses a decorative arrangement according to the preamble of claim 1 and teaches an arrangements of tiles comprising a decorative plate and a support plate, wherein the latter recedes behind the contour of the decorative plate.

Even though there exist solutions to the problem of minimizing gaps and dividing lines between two adjacent elements, there is still need for improved devices and methods for providing decorative arrangements which may combine two different decorative elements in a flawless manner. In particular, there is a need to obtain decorative arrangements giving a visual impression of precision and high quality for an observer.

### SUMMARY

Consequently, an object of the invention is to provide an improved decorative arrangement which solves the above-mentioned problems associated with previous solutions and which offers a cost-effective and accurate decorative arrangement forming a visual design or pattern and giving the viewer an impression of high quality and precision.

The above-mentioned object is achieved by a decorative arrangement for mounting on a support and comprising a first element and a second element configured for being arranged next to each other so as to define a visual symbol, pattern or design. Furthermore, the first element comprises a first end portion having a first thickness which is less than a second thickness of a proximate part of the first element; and the second element comprises a second end portion having a third thickness which is less than a fourth thickness of a proximate part of the second element; said second end portion being partly covered by said first end portion when the decorative arrangement is mounted on said support; wherein the first end portion and the second end portion are arranged to define, when combined together, said visual symbol, pattern or design, and wherein said first end portion has a recess and said proximate part of the second element has a recess which form part of said visual symbol, pattern or design. The invention provides certain advantages over previously known technology, primarily due to the fact that it allows deviations in measurements and shape of the first and second element to be absorbed by the shape of said visual symbol, pattern or design without the decorative arrangement being perceived as being of inferior quality or low precision by an observer. Also, the first and second elements can be manufactured within certain tolerances without any risk for an inacceptable visual appearance when mounted. The arrangement according to the invention is consequently not "visually sensitive", i.e. it will not create a visual appearance leading to a perceived low quality.

According to an embodiment, the first end portion and said second end portion of the decorative arrangement are shaped so as to define the design of a cross when mounted. Due to the fact that a cross is part of the flags or certain countries, this means that the arrangement can be used for example for promoting goods being associated with countries having certain national flags.

According to an embodiment, a distance is defined between the respective ends of the first end portion and the proximate part of the second element. This distance is defined by a displacement of the first element and the second element in their longitudinal direction, and furthermore defines a space forming part of said visual symbol, pattern or design. This allows a high degree of flexibility in forming a suitable visual symbol, pattern or design.

According to an embodiment, each of the first element and the second element is formed with a groove extending across said first element. These grooves delimite the visual symbol, pattern or design, thereby making it appear visually more clearly and distinctly.

Also, according to an embodiment, the first end portion and second end portion at least partly have a surface structure which differs from that of the remaining first and second elements. This makes the visual symbol, pattern or design appear visually more clearly against the remaining parts of the arrangement.

The invention can be applied in different types of vehicles, such as cars, trucks, and buses. Although the invention will be described with respect to an application in the form of a conventional car, the invention is not restricted to this particular vehicle only. Generally, the invention can also be used in other applications than vehicles.

Further advantages and advantageous features of the invention are disclosed in the following description and in the dependent claims.

### BRIEF DESCRIPTION OF THE DRAWINGS

Further objects, features, and advantages of the present disclosure will appear from the following detailed description, wherein certain aspects of the disclosure will be described in more detail with reference to the accompanying drawings, in which:
- Fig. 1: shows a perspective view of an interior of a vehicle with a decorative arrangement comprising a first element and a second element, according to a first embodiment.
- Fig. 2: is an enlarged view of a part of an embodiment of the decorative arrangement, in a condition in which it is mounted on a support.
- Fig. 3: is an enlarged view corresponding to Fig. 2 but when shows the decorative arrangement in a condition in which the first element and the second element are separated.
- Fig. 4: is a view corresponding to Fig. 2 but showing an alternative embodiment.

### DETAILED DESCRIPTION

Different embodiments of the present invention will now be described with reference to the accompanying drawings. The arrangements described below and defined in the appended claims can be realized in different forms and should not be construed as being limited to the embodiments described below.

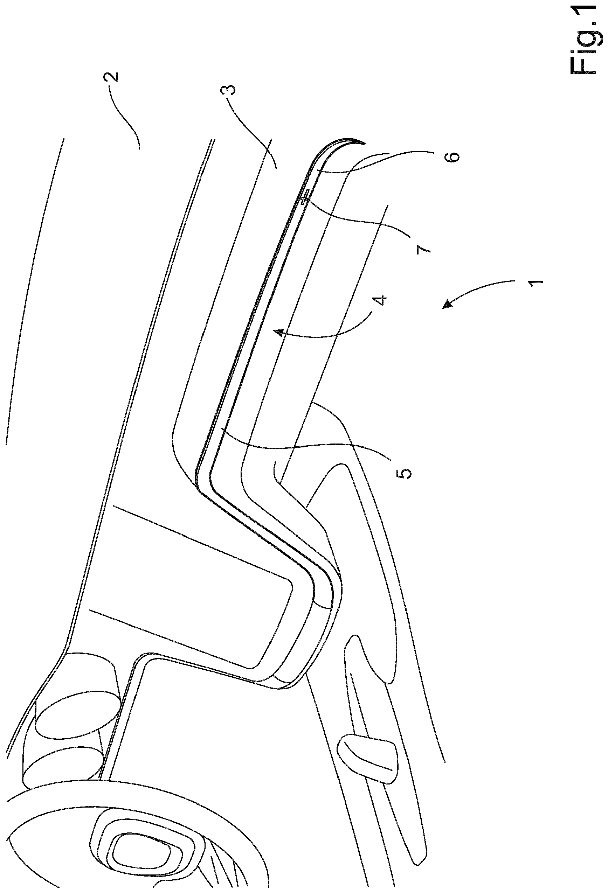

With initial reference to Fig. 1, there is shown a perspective view of a front part of a compartment 1 of a vehicle, for example in the form of a conventional car. The vehicle compartment 1 comprises a dashboard 2 which is arranged in a generally conventional manner. The dashboard 2 comprises a support surface 3 which supports a decorative arrangement 4 which extends along generally the entire dashboard 2, i.e. transverse to the longitudinal extension of the vehicle in question.

According to an embodiment, the decorative arrangement 4 is constituted by an set of relatively thin decorative strips being manufactured from a suitable plastic material such as polyvinyl chloride (PVC) having a chrome surface finish. The decorative strips can be manufactured for example by means of an extrusion molding arrangement. Such a manufacturing process is previously known as such, and for this reason it is not described in detail here. Strips and linings of various types and of such material and surface finish as mentioned above are previously known and are often used in the automotive industry. The actual surface finish, colour, material and design of the decorative arrangement 4 can be varied within the scope of the invention.

According to the embodiment shown in Fig. 1, the decorative arrangement 4 is constituted by a first decorative element 5 and a second decorative element 6 which are configured so as to be arranged next to each other when the complete arrangement 4 is mounted on the support surface 3. More precisely, the second decorative element 6 is arranged as an extension of the first decorative element 5 in its longitudinal direction.

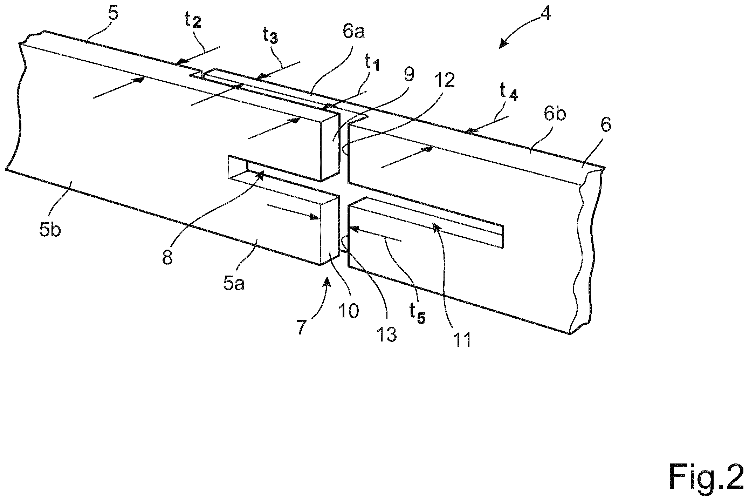

According to the embodiment, the decorative arrangement 4 is split into the two decorative elements 5, 6. For various reasons, it can be necessary to split such a decorative arrangement 4 into two or more strips instead of using one single element. For example, the manufacturing process for the decorative strips may result in variations in length of said strips. Also, the length of the decorative strips may vary depending on the temperature, in particular when they are mounted on the support surface 3. For these reasons, the decorative arrangement 4 as shown in Fig. 1 is divided into two elements, allowing variations in length to be absorbed by mounting the elements 5, 6 next to each other. More precisely, and according to an embodiment, the first element 5 is positioned in the left part in the drawing and the second element 6 is positioned in the right part of the drawing, so that the end portions of the elements 5, 6 meet in a particular section of the decorative arrangement 4 which corresponds to a visual symbol, pattern or design 7. In Fig. 1, this visual symbol is in the form of a cross, which can be used as a part of a symbol for a flag. Consequently, this symbol 7 is formed as a result of the first element 5 and the second element 6 being combined together by being positioned next to each other. This is shown in greater detail in Fig. 2, which is an enlarged view of an end section 5a of the first element 5 and an end section 6a of the second element 6.

Fig. 2 shows a decorative arrangement 4 according to an embodiment and in an assembled condition, i.e. in a condition in which it is mounted on the support 3 (wherein the support 3 is however not shown in Fig. 2). According to the embodiment, the first element 5 has a first end portion 5a and the second element 6 has a second end portion 6a. The end portions 5a, 6a are arranged adjacent to each other so that a visual design or symbol 7 - in this case a cross indicating the shap of a flag - is defined when the elements 5, 6 are combined as shown. Furthermore, the first end portion 5a has a first thickness t₁ which is less than a second thickness t₂ of a proximate part 5b of the first element 5. In other words, the first end portion 5a is thinner than the part 5b which is immediately adjacent to said first end portion 5a.

Also, in a corresponding manner, the second end portion 6a has a third thickness t₃ which is less than a fourth thickness t₄ of a proximate part 6b of the second element 6. Consequently, the second end portion 6a is thinner than the part 6b of the second element 6 which is immediately adjacent to said second end portion 6a.

Furthermore, and as shown in Fig. 2, the first element 5 and the second element 6 are positioned in relative positions next to each other in a manner so that the second end portion 6a is partly covered by said first end portion 5a when the decorative arrangement 4 is mounted on the support 3. In other words, the second end portion 6a is positioned behind the first end portion 5a when viewed by an observer.

As mentioned above, the first element 5 and the second element 6 are arranged next to each other in a manner so that they define a visual symbol, pattern or design 7 when they are combined together and mounted on the support 3. The embodiment shown in Fig. 2 is configured so that the first element 5 and the second element 6 together define a symbol 7 in the shape of a cross, such as a cross which can be part of a design of a flag. This is shown clearly in Fig. 2. Such a cross is included in the national flags of certain countries (for example Sweden, Denmark and Finland). Designs involving such a flag can for this reason be used in decorative arrangements in order to promote goods being associated with such countries, or trademarks which are related to such countries.

It should be noted that the shape of the cross, and the entire flag, is partly determined by the distance which is created as a result of the first end portion 5a being divided, by means of a gap or recess 8, into a first protrusion 9 and a second protrusion 10. In a corresponding manner, the proximate part (6b) of the second element (6) is formed with a gap 11, or recess, which defines a third protrusion 12 and a fourth protrusion 13 of the proximate part (6b) of the second element (6). According to alternative embodiments, other forms of visual patterns and designs can be provided by forming the first end section 5a and the second end section 6a in a suitable manner. Such designs include logotypes, letters, numbers, names of companies and persons, trademarks and similar. The particular shape of such designs depend on the geometry of the first end portion 5a and the second end portion 6a, and also on the distance between these end portions 5a, 6a when the decorative arrangement 4 is mounted, i.e. the distance indicated as t₅ in Fig. 2. This distance t₅ is defined as a vertically extending space or slot between the edge of the first end portion 5a and the edge of the proximate part 6b of the second element 6. This space forms a shape of a cross together with the gaps 8, 11, as shown in Fig. 2.

According to further embodiments, the vertical space defined by the distance t₅ does not necessarily have to be vertical. In fact, this space may extend in an inclined way, or may be curved or of any other suitable form in order to form part of a desired visual pattern.

An important feature of the invention is that the first end portion 5a and the second end portion 6a are not positioned immediately next to each other. In fact, the distance t₅ absorbs small differences in dimensions of the first and second elements 5, 6 while contributing to the shape of the actual design 7. For an observer, it will not be apparent if the first and second elements 5, 6 have deviations in their dimensions since small variations, approximately 1-2 millimetres, will not be perceived as being unnatural or incorrect when regarding the shape of the cross as shown in Fig. 2.

Consequently, the vertical part of the cross has a width t₅ which may vary depending on the measurements of the first and second elements 5, 6 and also on how much of the tolerances that need to be absorbed. For an observer, there will still be an acceptable visual appearance which gives an impression of quality and precision.

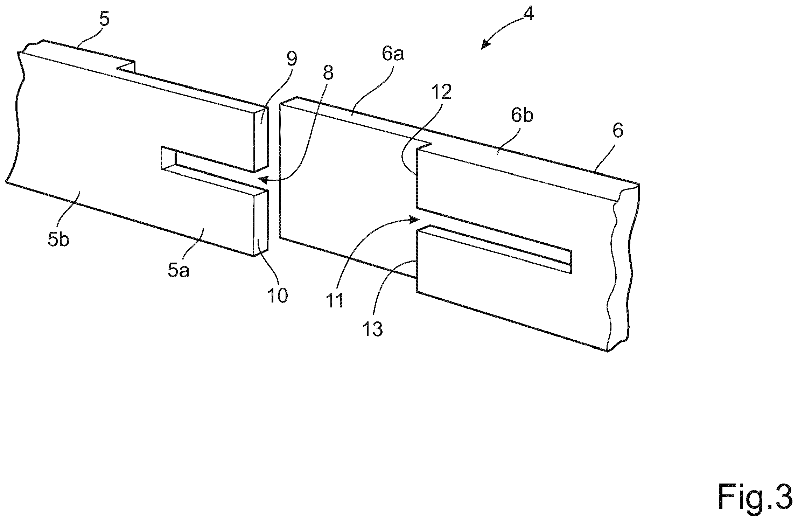

Fig. 3 corresponds generally to Fig. 2 but shows the first element 5 and the second element 6 in a condition in which they are moved apart, i.e. where they are displaced a certain distance away from each other in their longitudinal direction. Consequently, this corresponds to a non-mounted condition in which the elements 5, 6 are not attached to the support 3. It is apparent from Fig. 3 that the elements 5, 6 may form different types of visual designs depending on the distance between them when they are mounted and also depending on the actual design, dimensions and shape of the first end section 5a and the second end section 6a. Fig. 2 also shows that the second end portion 6a will be partly covered by the first end portion 5a when the decorative arrangement 4 is mounted on the support 3 (see Fig. 1). In such a mounted condition, the first end portion 5a and the second end portion 6a will be combined together so as to define the visual symbol, pattern or design 7 as described above.

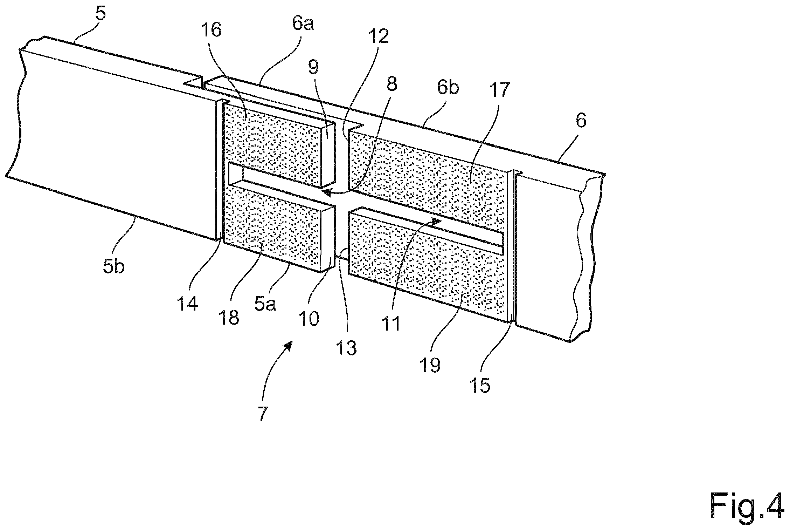

An alternative embodiment is shown in Fig. 4. The purpose of this embodiment is to obtain a more clear and distinct representation of the visual design 7, i.e. in this case a flag. To this end, the first element 5 is provided with a groove 14 which extends across the first element 5 and which consequently defines the shape and design of the first and second protrusions 9, 10 in a more clear and distinct manner. In a similar way, the second element 6 is provided with a further groove 15 which defines the shape and design of the third and fourth protrusions 12, 13 in a more clear and distinct manner.

This means that a visual design of a flag will be more clear and accurate by using the grooves 14, 15 in the first element 5 and second element 6, respectively. The actual positions of the grooves 14, 15 and the length of the two recesses 8, 11 define the dimensions and appearance of the "flag" 7 of the decorative arrangement 4. More precisely, the four protrusions 9, 10, 12, 13 formed by the first end element 5a and the second end element 6a will define (together with the grooves 14, 15) four rectangles 16, 17, 18, 19 which together have the appearance of a flag.

According to an embodiment, the surface structure of each rectangle 16, 17, 18, 19 can be formed in a manner which is different from the surface of the remaining parts of the first and second elements 5, 6. For example, the surface structure of the rectangles 16, 17, 18, 19 could be manufactured with a particular texture, graining or coating which gives the rectangles 16, 17, 18, 19 a different appearance or structure than the remaining parts of the first and second elements 5, 6. Such a texture could be obtained by etching or other methods associated with injection molding of plastic components. Also, the rectangles 16, 17, 18, 19 could be covered by a coating in the form of a color, a thin film or a surface structure which renders the surface of the rectangles 16, 17, 18, 19 different from the remaining parts of the first and second elements 5, 6.

In summary, by providing a surface structure of the rectangles 16, 17, 18, 19 which differs from the remaining parts of the decorative arrangement 4, the visual design in question will appear more clearly and distinct to an observer.

It is to be understood that the present invention is not limited to the embodiments described above and illustrated in the drawings.

For example, the inventive concept is not limited to use in vehicles such as a car, but can be implemented in other types of vehicles too, for example trucks and buses. In case it is implemented in vehicles, it can be used in both exterior and interior decorative arrangements, i.e. running boards and strips mounted on exterior and interior supports on a vehicle.

## Claims

1. Decorative arrangement (4) for mounting on a support (3) and comprising a first element (5) and a second element (6) configured for being arranged next to each other so as to define a visual symbol, pattern or design (7); wherein
- the first element (5) comprises a first end portion (5a) having a first thickness (t₁) which is less than a second thickness (t₂) of a proximate part (5b) of the first element (5); and
- the second element (6) comprises a second end portion (6a) having a third thickness (t₃) which is less than a fourth thickness (t₄) of a proximate part (6b) of the second element (6);
- said second end portion (6a) being partly covered by said first end portion (5a) when the decorative arrangement (4) is mounted on said support (3);
**characterized in that**
- the first end portion (5a) and the second end portion (6a) are arranged to define, when combined together, said visual symbol, pattern or design (7), wherein said first end portion (5a) has a recess (8) and said proximate part (6b) of the second element (6) has a recess (11) which form part of said visual symbol, pattern or design (7).

2. Decorative arrangement (4) according to claim 1, wherein said first end portion (5a) and said proximate part (6b) of the second element (6) are shaped so as to define the design of a cross when mounted.

3. Decorative arrangement (4) according to any one of the preceding claims, wherein a distance (t₅) between the respective ends of the first end portion (5a) and the proximate part (6b) of the second element (6), defined by a displacement of the first element (5) and the second element (6) in their longitudinal direction, defines a space forming part of said visual symbol, pattern or design (7).

4. Decorative arrangement (4) according to any one of the preceding claims, wherein said first element (5) is formed with a groove (14) extending across the first element (5), and said second element (6) is formed with a further groove (15) extending across the second element (6), said grooves (14, 15) delimiting said visual symbol, pattern or design, thereby making it appear visually more clearly and distinctly.

5. Decorative arrangement (4) according to any one of the preceding claims, wherein said first end portion (5a) and said proximate part (6b) of the second element (6) at least partly have a surface structure which differs from that of the remaining first and second elements (5, 6).

6. Decorative arrangement (4) according to claim 5, wherein said surface structure is formed by means of etching or by means of a surface coating.

## Patentansprüche

1. Dekorative Anordnung (4) zur Montage an einem Träger (3), die ein erstes Element (5) und ein zweites Element (6) umfasst, die ausgebildet sind, um nebeneinander angeordnet zu werden, um so ein visuelles Symbol, Dekor oder Design (7) zu definieren, wobei
- das erste Element (5) einen ersten Endabschnitt (5a) mit einer ersten Dicke (t₁) umfasst, die geringer als eine zweite Dicke (t₂) eines benachbarten Teils (5b) des ersten Elements (5) ist; und
- das zweite Element (6) einen zweiten Endabschnitt (6a) mit einer dritten Dicke (t₃) umfasst, die geringer als eine vierte Dicke (t₄) eines benachbarten Teils (6b) des zweiten Elements (6) ist,
- wobei der zweite Endabschnitt (6a) teilweise vom ersten Endabschnitt (5a) abgedeckt ist, wenn die dekorative Anordnung (4) am Träger (3) montiert ist,
**dadurch gekennzeichnet, dass**
- der erste Endabschnitt (5a) und der zweite Endabschnitt (6a) angeordnet sind, um in Kombination miteinander das visuelle Symbol, Dekor oder Design (7) zu definieren, wobei der erste Endabschnitt (5a) einen Rücksprung (8) und das benachbarte Teil (6b) des zweiten Elements (6) einen Rücksprung (11) hat, die Teil des visuellen Symbols, Dekors oder Designs (7) sind.

2. Dekorative Anordnung (4) nach Anspruch 1, wobei der erste Endabschnitt (5a) und das benachbarte Teil (6b) des zweiten Elements (6) geformt sind, um im montierten Zustand das Design eines Kreuzes zu definieren.

3. Dekorative Anordnung (4) nach einem der vorstehend aufgeführten Ansprüche, wobei eine Distanz (t₅) zwischen den jeweiligen Enden des ersten Endabschnitts (5a) und dem benachbarten Teil (6b) des zweiten Elements (6), definiert durch ein Verschieben des ersten Elements (5) und des zweiten Elements (6) in ihrer Längsrichtung, einen Raum definiert, der Teil des visuellen Symbols, Dekors oder Designs (7) ist.

4. Dekorative Anordnung (4) nach einem der vorstehend aufgeführten Ansprüche, wobei das erste Element (5) mit einer Nut (14) ausgebildet ist, die sich über das erste Element (5) erstreckt, und das zweite Element (6) mit einer weiteren Nut (15) ausgebildet ist, die sich über das zweite Element (6) erstreckt, wobei die Nuten (14, 15) das visuelle Symbol, Dekor oder Design begrenzen, so dass es visuell klarer und deutlicher erscheint.

5. Dekorative Anordnung (4) nach einem der vorstehend aufgeführten Ansprüche, wobei der erste Endabschnitt (5a) und das benachbarte Teil (6b) des zweiten Elements (6) mindestens teilweise eine Oberflächenstruktur haben, die sich von derjenigen der verbleibenden ersten und zweiten Elemente (5, 6) unterscheidet.

6. Dekorative Anordnung (4) nach Anspruch 5, wobei die Oberflächenstruktur mittels Ätzen oder mittels einer Oberflächenbeschichtung gebildet ist.

## Revendications

1. Agencement décoratif (4) à monter sur un support (3) et comprenant un premier élément (5) et un second élément (6) configurés de manière à être agencés l'un à côté de l'autre de façon à définir un symbole, un motif ou un dessin visuel (7); dans lequel
- le premier élément (5) comprend une première partie d'extrémité (5a) qui présente une première épaisseur (t₁) qui est inférieure à une deuxième épaisseur (t₂) d'une partie proximale (5b) du premier élément (5); et
- le second élément (6) comprend une seconde partie d'extrémité (6a) qui présente une troisième épaisseur (t₃) qui est inférieure à une quatrième épaisseur (t₄) d'une partie proximale (6b) du second élément (6);
- ladite seconde partie d'extrémité (6a) est partiellement couverte par ladite première partie d'extrémité (5a) lorsque l'agencement décoratif (4) est monté sur ledit support (3);
**caractérisé en ce que**
- la première partie d'extrémité (5a) et la seconde partie d'extrémité (6a) sont agencées de manière à définir, lorsqu'elles sont combinées l'une avec l'autre, ledit symbole, motif ou dessin visuel (7), dans lequel ladite première partie d'extrémité (5a) comporte un évidement (8) et ladite partie proximale (6b) du second élément (6) comporte un évidement (11) qui fait partie dudit symbole, motif ou dessin visuel (7).

2. Agencement décoratif (4) selon la revendication 1, dans lequel ladite première partie d'extrémité (5a) et ladite partie proximale (6b) du second élément (6) sont configurées de manière à définir le dessin d'un croix lorsqu'elles sont montées.

3. Agencement décoratif (4) selon l'une quelconque des revendications précédentes, dans lequel une distance (t₅) entre les extrémités respectives de la première partie d'extrémité (5a) et la partie proximale (6b) du second élément (6), définie par un déplacement du premier élément (5) et du second élément (6) dans leur direction longitudinale, définit un espace qui fait partie dudit symbole, motif ou dessin visuel (7).

4. Agencement décoratif (4) selon l'une quelconque des revendications précédentes, dans lequel ledit premier élément (5) est pourvu d'une rainure (14) qui s'étend à travers le premier élément (5), et ledit second élément (6) est pourvu d'une rainure supplémentaire (15) qui s'étend à travers le second élément (6), lesdites rainures (14, 15) délimitant ledit symbole, motif ou dessins visuel, rendant ainsi celui-ci visuellement apparent d'une façon plus nette et plus distincte.

5. Agencement décoratif (4) selon l'une quelconque des revendications précédentes, dans lequel ladite première partie d'extrémité (5a) et ladite partie proximale (6b) du second élément (6) présentent au moins partiellement une structure de surface qui diffère de celle des premier et second éléments restants (5, 6).

6. Agencement décoratif (4) selon la revendication 5, dans lequel ladite structure de surface est formée au moyen d'un procédé de gravure ou au moyen d'un procédé de revêtement de surface.
